**Europäisches Patentamt**

**European Patent Office**

**Office européen des brevets**

(19)

(11) Numéro de publication: **0 029 153**
**B1**

(12)

# FASCICULE DE BREVET EUROPEEN

(45) Date de publication du fascicule du brevet: **29.12.82**

(51) Int. Cl.³: **A 23 L 1/10, A 23 L 1/40**

(21) Numéro de dépôt: **80106736.4**

(22) Date de dépôt: **03.11.80**

(54) Procédé de fabrication d'une matière alimentaire de base instantanément dispersable dans l'eau.

(30) Priorité: **15.11.79 CH 10196/79**

(43) Date de publication de la demande:
**27.05.81 Bulletin 81/21**

(45) Mention de la délivrance du brevet:
**29.12.82 Bulletin 82/52**

(84) Etats contractants désignés:
**AT BE DE FR IT NL SE**

(56) Documents cités:
**DE - A - 2 209 565**
**FR - A - 1 495 040**
**FR - A - 1 602 733**
**GB - A - 1 355907**
**US - A - 2 440 604**
**US - A - 3 116 151**
**US - A - 4 021 582**
**US - A - 4 126 710**

**Le dossier contient des informations techniques présentées postérieurement au dépôt de la demande et ne figurant pas dans le présent fascicule.**

(73) Titulaire: **SOCIETE DES PRODUITS NESTLE S.A.**
**Case postale 353**
**CH-1800 Vevey (CH)**

(72) Inventeur: **Willi, Albert**
**Schäfligrabenstrasse 19**
**CH-8304 Wallisellen (CH)**
Inventeur: **Mooser, Oswaldo**
**Bahnhofstrasse 13**
**CH-8307 Effretikon (CH)**
Inventeur: **Maute, Willy**
**Weiherstrasse 19**
**CH-8307 Effretikon (CH)**

Courier Press, Leamington Spa, England.

EP 0 029 153 B1

**0 029 153**

Procédé de fabrication d'une matière alimentaire de base
instantanément dispersable dans l'eau

La présente invention a pour objet un procédé de fabrication d'une matière alimentaire de base instantanément dispersable dans l'eau à partir d'une matière amylacée et d'une graisse, dans lequel la graisse ou un mélange de la matière amylacée et de la graisse est soumis à un traitement thermique pour obtenir des modifications cristallines adéquates dans la graisse.

Les farines et amidons utilisés comme liaison pour les soupes et sauces sèches ne sont pas dispersables par addition d'eau bouillante, c'est-à-dire qu'ils forment des grumeaux. Par ailleurs, le roux utilisé par la ménagère comme épaississant ou comme base pour la préparation des sauces est un mélange chauffé de farine et de graisse. L'effet positif de la graisse dans ce mélange est évident. Mais, étant donné que les mélanges qui présentent une forte proportion de graisse ne se prêtent pas bien à la fabrication de produits pulvérulents, de telles matières alimentaires de base prêtes à l'emploi sont plutôt présentées en barquettes ou en tubes. Au cas où l'on doit les fabriquer malgré tout sous forme de flocons, le problème réside dans le fait qu'ils présentent une forte propension à coller les uns aux autres. On connaît par le brevet français No. 1 602 733 un procédé de fabrication de mélanges pulvérulents de matières grasses et de supports pulvérulents à l'aide d'un malaxeur chauffable comportant un couteau tournant et une grille de sortie. Ce document illustre bien les difficultés rencontrées à éviter la formation d'amas indissociables dès que la proportion de matière grasse dans le mélange dépasse environ 20 à 30%.

On connaît par le brevet britannique No. 1 355 907 un procédé de fabrication d'un concentré pour sauce présenté sous·forme d'un bloc de forme déterminée qui peut être fondu et dispersé dans l'eau amenée à ébullition. Ce concentré comprend des proportions égales de matière grasse, d'amidon et d'un ingrédient donnant à la sauce son goût particulier. La matière grasse est constituée elle-même d'un mélange d'une huile et d'une graisse, avec addition recommandée d'un émulsifiant, mélange tel que le produit final garde sa forme, son brillant et son inocuité à température ambiante, de sorte qu'il puisse être vendu p. ex. sous forme de disque appliqué en emballage plastique sur la boîte de conserve du mets avec lequel la sauce sera servie. La préparation de la sauce par la ménagère pourrait être encore grandement simplifiée si elle disposait, au lieu d'un bloc à faire fondre dans l'eau et à remuer vigoureusement pour obtenir la dispersion recherchée, d'un produit en flocons à écoulement libre qui ne forme pas d'amas et qui se disperse instantanément dans l'eau.

On connaît par le document US 4 126 710 un procédé de fabrication d'un concentré du même type que le précédent, destiné à être présenté de préférence en blocs ou barres moulés ou extrudés. L'accent est mis dans ce document sur un refroidissement intermédiaire à des niveaux de température élevés qui n'ont pas d'influence sur la cristallisation de la matière grasse dans le produit final, mais plus précisément sur la rhéologie du mélange chaud initial de matières grasses et de matières féculentes. Quoique mentionnant la présentation du produit sous forme de flocons, ce document ne donne pas la façon d'y parvenir.

La présente invention a pour but de fournir par un traitement thermique adéquat ainsi qu'un choix idoine des matières premières et des rapports pondéraux une matière alimentaire de base à partir d'une matière amylacée et de graisse qui se présente et qui reste à température ambiante sous forme finement divisée, non collante et bien fluide, qui soit instantanément dispersable dans l'eau et ne forme pas de grumeaux et qui présente la viscosité désirée.

Le procédé selon la présente invention est caractérisé par le fait que l'on utilise la matière amylacée et la graisse dans un rapport pondéral de 55:45 à 80:20 et l'on réalise le traitement thermique sous forme d'un refroidissement contrôlé de la graisse fondue en sorte que la fraction liquide de la graisse à environ 25—35°C mesurée par résonance magnétique nucléaire soit inférieure à 50%.

On a trouvé en effet qu'il n'est pas possible d'obtenir les propriétés désirées par des cycles de température. Bien qu'il soit généralement admis que lors des traitements thermiques des graisses seuls les niveaux de température où les graisses sont maintenues ainsi que les temps durant lesquels on les y maintient sont importants, on a trouvé dans le cas présent que c'est un refroidissement contrôlé qui joue le rôle décisif. Dans la présente description il faut comprendre l'expression matière alimentaire de base comme un produit fini ou semi-fini qui peut être incorporé dans des mélanges pour potages ou sauces pour servir de liant lors de la préparation de soupes et sauces par addition d'eau bouillante sur ces mélanges secs.

Cette matière alimentaire de base doit donc fournir une liaison sans former des grumeaux quand on la mouille avec de l'eau bouillante et tant qu'on ne l'utilise pas elle doit être conservable à température ambiante sans devenir collante. On a établi que l'on pouvait déterminer si le produit présente les qualités organoleptiques voulues à l'aide de deux critères que l'on appellera dans la suite du présent exposé quantité de grumeaux ou grumeaux et pouvoir de liaison ou viscosité.

Pour étudier la formation des grumeaux, il faut tout d'abord dissoudre ou disperser des échantillons des produits d'une manière standard. On peut réaliser cela à l'aide d'un dispositif appelé machine à cuillère. Celle-ci consiste en un mélangeur usuel de laboratoire dont l'axe métallique porte à son extrémité inférieure une cuillère disposée parallèlement à l'axe à deux centimètres de celui-ci. On y mélange 12 g de produit avec 150 ml d'eau bouillante et on laisse tourner la machine pendant 15 s à

2

une vitesse de 150 tours par minute. Puis on fait passer la suspension à travers un tamis dont les mailles ont une ouverture de 1 mm. On fait sécher le tamis avec la matière qu'il a retenue durant une heure à 130°C et on le pèse. On soustrait de la valeur obtenue le poids du tamis vide et l'on calcule la quantité de grumeaux comme étant le quotient du poids ainsi mesuré sur le poids total de l'échantillon. Le produit est considéré comme bon à cet égard si la quantité de grumeaux est inférieure à environ 2%.

On peut déterminer le pouvoir de liaison à l'aide de la viscosité plastique $\eta_c$ (en mPas) selon Casson. Si la viscosité se trouve entre 20 et 35 mPas, on dit que le produit est organoleptiquement bon, c'est-à-dire qu'il présente une bonne palatabilité. Pour déterminer cette viscosité on peut disperser un échantillon du produit comme décrit ci-dessus. On peut ensuite examiner le comportement à l'écoulement de la suspension tamisée à l'aide d'un viscosimètre rotatif (Contraves Rheomat 15-T-FC, température du bain 70°C, élément B).

Sur base de ces deux critères et eu égard au bon écoulement du produit, au fait qu'il ne colle pas, à sa conservabilité et à sa stabilité on a donc établi que la matière amylacée et la graisse doivent être utilisées dans un rapport pondéral de 55:45 à 80:20 et que le traitement thermique doit être réalisé sous forme d'un refroidissement contrôlé, en sorte que la fraction liquide de la graisse à 25—35°C soit inférieure à 50%. Si l'on a plus de graisse dans le mélange de matière amylacée et de graisse, la viscosité de la suspension obtenue de la manière décrite ci-dessus, appelée par la suite simplement la suspension, devient trop faible. Si l'on utilise davantage de graisse, non seulement la quantité de grumeaux devient nécessairement plus grande que 2%, mais encore la préparation d'un mélange homogène de matière amylacée et de graisse devient difficile. La teneur en graisse du mélange ainsi que la fraction liquide de la graisse à 25—35°C peuvent être déterminées rapidement et facilement à l'aide d'un spectromètre à impulsion NMR, NMR étant les initiales de l'expression anglaise signifiant la résonnance magnétique nucléaire, de la manière exposée ci-après.

Les mesures reposent sur le principe de l'excitation des protons dans un champ magnétique à l'aide d'impulsions haute fréquence. Le déclin de l'état d'excitation des protons est suivi à l'aide d'un spectromètre qui fournit une courbe caractéristique du temps de relaxation.

Le temps de relaxation des protons dans la graisse liquide est différent du temps de relaxation des protons dans la graisse solide. Cette différence est utilisée dans l'appareil pour déterminer la fraction liquide et la fraction solide de la graisse. Les mesures peuvent être faites par exemple à l'aide d'un appareil "Minispec p 20" de la firme Bruker, Karlsruhe, Allemagne, (programme d'impulsions: 90°, rythme de répétition: 25). On peut étalonner le spectromètre à l'aide dun échantillon dont on a déterminé le contenu en graisse auparavant par une extraction conventionnelle. On obtient ainsi un facteur qui peut être introduit dans le dispositif de calcul du spectromètre et est caractéristique du produit. Pour réaliser la mesure, on peut introduire un échantillon du produit dans une éprouvette adéquate (hauteur de l'échantillon: minimum 3 cm), tempérer l'éprouvette, la sécher, l'introduire dans un spectromètre et mesurer. Pour déterminer la teneur en graisse totale, on peut règler la température du bain de tempérage à 70°C. On peut laisser l'échantillon dedans durant 15 min. On obtient ainsi que toute la graisse de l'échantillon fonde et la teneur en graisse totale est alors égale à la graisse liquide de l'échantillon ainsi préparé. La mesure doit évidemment être réalisée immédiatement après le tempérage.

Pour déterminer la fraction liquide de la graisse à 25—35°C on peut tenir l'échantillon durant 20 min à 25—35°C et, après séchage de l'éprouvette, l'introduire immédiatement dans le spectromètre et mesurer. Le résultat de cette mesure directe est la fraction liquide de la graisse à 25—35°C en % du poids de l'échantillon. Mais comme on s'intéresse à la fraction liquide de la graisse en % du total de la graisse il faut encore diviser la valeur obtenue par la teneur totale en graisse de l'échantillon. L'eau contenue dans l'échantillon est mesurée en même temps et fausse le résultat de la mesure. On peut tenir compte de cette source d'erreur l'aide de courbes de correction faciles à établir pour le spécialiste.

Pour la mise en oeuvre du procédé selon la présente invention les graisses présentant un point de limpidité de 35—50°C se sont révélées particulièrement adéquates. Avec des graisses présentant un point de limpidité inférieur, on ne parvient pas à diminuer suffisamment la fraction liquide de la graisse à 25—35°C. Avec des graisses présentant un point de limpidité plus élevé, un désavantage organoleptique devient perceptible, à savoir une sensation sableuse qui peut provenir d'une formation de cristaux sur le palais.

Lors du choix de la graisse à utiliser, il faut tenir compte de la condition décisive selon laquelle la fraction liquide de la graisse du produit à 25—35°C doit être suffisamment faible pour que le produit ne colle pas durant un entreposage à une température maximale appropriée pour des conditions climatiques déterminées. Des graisses préférées à cet égard sont la graisse d'arachides ou de palme avec des points de limpidité situés dans le domaine ci-dessus. Pour des zones tempérées, on peut considérer comme température maximale 30°C alors que pour des zones plus froides des températures plus basses jusqu'à environ 25°C et pour des zones plus chaudes des températures plus élevées jusqu'à environ 35°C peuvent être considérées comme appropriées.

On n'a pas seulement constaté que, dans le cas présent, ce ne sont pas des cycles de températures qui mènent au succès, mais encore que le refroidissement contrôlé idoine des différentes graisses peut être réalisé avec une vitesse de refroidissement constante déterminée qui mène directement au résultat souhaité. Cette vitesse de refroidissement optimale semble inversément proportionnelle au point de limpidité et se situe dans le domaine de environ 1—8°C/min. Pour des vitesses de refroidissement plus élevées qui sont également utilisables·dans le présent procédé et qui sont même recommandables pour des raisons pratiques il faut prévoir une stabilisation du produit. Cette stabilisation peut être réalisée en maintenant le produit à une température comprise entre 2,5 et 20°C durant un temps d'autant plus long que la vitesse de refroidissement est grande et qui peut se situer entre 5 min et 6 jours. Les vitesses de refroidissement possibles sont comprises entre 1 et 800°C/min. On parcourt le domaine de température compris entre 35°C et 5—10°C à cette vitesse de refroidissement constante sans aucune interruption. Il est en effet possible d'interrompre le refroidissement contrôlé au-dessus de 35°C sans que la fraction liquide de la graisse souhaitée devienne inatteignable. Mais ceci n'est pas nécessairement possible dans le domaine indiqué. Au-dessous de 5—10°C, une interruption du refroidissement contrôlé correspond plutôt à une phase de stabilisation qui n'est pas absolument nécessaire mais ne nuit certainement pas.

On peut utiliser comme matière amylacée différentes farines généralement en combinaison avec une certaine quantité de différents amidons. Selon le produit que l'on désire obtenir tel que les soupes ou les sauces de diverses sortes et divers goûts, on peut utiliser de la farine de blé, de la farine de riz ou même de la farine de pois. Une farine de blé obtenue avec un taux d'extraction de 65 ou 80% seule ou en combinaison avec un supplément d'amidon tel que l'amidon de maïs, la fécule de pomme de terre, l'amidon de blé ou l'amidon de riz est particulièrement appropriée. Il est également possible d'ajouter à la farine de blé de la gomme de guar, de la pectine ou même un mélange d'amidon de tapioca et de gélatine, pour autant que le produit obtenu donne des suspensions présentant la viscosité désirée et une quantité de grumeaux suffisamment faible. Lorsqu'on utilise des farines qui fournissent une liaison relativement faible telles que la farine de riz ou la farine de pois jaunes, l'addition d'amidon sinon peu approprié tel que l'amidon de tapioca peut être recommandée. L'amidon de tapioca peut donc être utilisé soit lorsque la farine présente un pouvoir de liaison trop faible soit lorsqu'un additif supplémentaire tel que par exemple la gélatine diminue la viscosité. Finalement, on peut prévoir comme additif aux graisses et matières amylacées mentionnées ci-dessus quelques % d'une graisse dure comme source de noyau de cristallisation et des quantités adéquates d'un stabilisateur de goût tel que par exemple les antioxydants naturels.

Pour mettre en oeuvre le présent procédé, on peut ajouter la matière amylacée, le cas échéant un prémélange de farine et d'amidon, à la graisse fondue. La température de la graisse fondue peut être d'environ 60—70°C. Par contre, la température finale du mélange de graisse et de farine peut être comprise entre environ 38 et 70°C selon que le mélange luimême a été chauffé ou non. Cela dépend de la manière dont on refroidit le mélange de graisse et de farine et on forme les flocons. De préférence, on étend le mélange soit sur un tambour de refroidissement, soit sur une bande de refroidissement en acier, on le laisse refroidir là-dessus quelques secondes jusqu'à une température finale de 5—10°C et on le racle. Le temps de séjour sur un tambour de refroidissement peut n'être que de 3 à 5 s, de sorte qu'un entreposage de plusieurs jours à une température de 2,5 à 20°C est recommandé pour la stabilisation du mélange. Par contre, pour des temps de séjour plus longs de 6 à 20 s sur la bande en acier, on peut recommander un entreposage subséquent d'environ 2 jours au frigidaire à environ 2 à 10°C.

Le produit obtenu par le procédé selon la présente invention peut être utilisé dans la fabrication de produits instantanés, en particulier les potages et sauces.

Les exemples ci-après sont donnés à titre d'illustration. Les % y sont exprimés en poids.

Exemple 1

On mélange à l'avance 17% d'amidon de maïs et 47% de farine de blé obtenue avec un degré d'extraction de 65%. On fond sur un grill 35% de graisse d'arachides présentant un point de limpidité de 41 à 43°C et on les maintient dans un récipient à 60°C. On verse la graisse fondue dans un récipient à double manteau et agitateur et on y ajoute tout en remuant tout d'abord 0,02% d'un mélange d'antioxydants naturels puis 1% d'un triglycéride présentant un point de limpidité de 57 à 59°C. On ajoute alors lentement le prémélange de farine et d'amidon. On règle la température finale de la masse fondue à 60—65°C. La masse fondue est transportée dans un récipient thermostatisé devant un dispositif de refroidissement et pompée à l'aide d'une pompe à engrenage, par en-bas, dans une cuve de chargement conique à double paroi. De cette cuve, la masse fondue est déposée par un tambour de chargement, par en-bas, sur un tambour de refroidissement de la firme Escher-Wyss, Type EK 395. Le produit refroidi et solidifié est détaché du cylindre par un couteau.

A l'aide de l'agrégat de refroidissement auquel il est relié le dispositif élimine 24'000 kcal/h, ceci avec une surface de refroidissement effective de 2,8 m² à compter du tambour de chargement jusqu'au couteau.

Le dispositif fonctionnait dans les conditions suivantes:

| | |
|---|---|
| Débit du produit | 500—700 kg/h |
| Espace entre le tambour de refroidissement et le tambour de chargement | 200—230 $\mu$ |
| Vitesse de rotation du tambour de chargement | 15,5 t/min |
| Vitesse de rotation du tambour de refroidissement | 7,5 t/min |

| Temps de séjour du produit sur le tambour de refroidissement | 3,5 s |
| Température de la masse fondue au moment du chargement | 60—65°C |
| Température de la saumure | —8° à —4°C |
| Débit de la saumure | 10—15 m³/h |
| Température à laquelle les flocons sont détachés | 8—12°C |

Les flocons détachés présentent une surface d'environ 9 à 25 mm² et une épaisseur de 0,2—0,3 mm. Ils sont immédiatement introduits dans des grands sacs de 400 kg et entreposés au frigidaire au moins 2 jours à 8—10°C. Après ce temps d'entreposage, les flocons ne collent plus les uns aux autres. Ils sont prêts à être incorporés dans des mélanges secs pour soupes ou sauces. Les qualités de ces flocons demeurent inchangées même après un entreposage de 3 mois à 30°C.

Exemple 2

On prépare de la manière décrite à l'exemple 1 des flocons de graisse et de farine à partir de 36,5% de graisse d'arachides présentant un point de limpidité de 41—43°C, 47% de farine de blé obtenue avec un degré d'extraction de 65% et 16,5% d'amidon de pomme de terre. Alors que les flocons de graisse et de farine immédiatement dispersables dans l'eau de l'exemple 1 doivent être mouillés avec de l'eau bouillante, ceux de l'exemple 2 peuvent également être mouillés avec de l'eau qui n'a que 80°C.

Exemple 3

On prépare séparément un prémélange de 17% d'amidon de pomme de terre et 47% de farine de blé obtenue avec un degré d'extraction de 65%. On fond à 60—65°C 37% de graisse de palme présentant un point de limpidité de 41—43°C et on la mélange en continu avec le prémélange d'amidon et de farine à l'aide d'un mélangeur à double vis. On dépose la masse fondue à la sortie du mélangeur sur une bande d'acier à l'aide d'une cuve de chargement à double manteau. On maintient la température de cette cuve à 50—60°C. Les conditions de travail sur la bande de refroidissement sont les suivantes:

| Température de dépôt de la masse (ex graisse à 60—65°C et prémélange amidon-farine à température ambiante) | 38—42°C |
| Température des flocons détachés | 7—10°C |
| Temps de séjour | 12 s |
| Epaisseur du film | 0,2—0,3 mm |
| Chargement de la surface (pour une épaisseur de 0,3 mm) | 0,360 kg/m² |
| Débit pour une surface de refroidissement de 5 m² | 540 kg/h |
| Température de la saumure entrée: | 0—3°C |
| sortie: | 2,5—5°C |
| Quantité de saumure | 25 l/kg product |

Les flocons présentent une fraction liquide de la graisse à 30°C par NMR de 46% au moment où ils sont détachés et de 42% après 2 jours au frigidaire à 8°C.

Exemple 4

On prépare différents flocons de graisse et de farine présentant différentes compositions. On prépare séparément la matière amylacée d'une part et la graisse fondue d'autre part avant de les mélanger ensemble. On maintient le mélange chauffé durant 45 min à 70°C et ensuite, dans un calorimètre adéquat et dans des conditions contrôlées, on le refroidit à 5°C à une vitesse de refroidissement constante. Le produit solide est mis sous forme de flocons et entreposé à température ambiante. On en détermine de la manière décrite ci-dessus sa quantité de grumeaux ("grumeaux"); son pouvoir de liaison, à savoir sa viscosité plastique $\eta_c$ selon Casson ("viscosité") et, le cas échéant, sa fraction liquide de la graisse à 30°C par NMR et sa vitesse de refroidissement optimale. Le type d'essais et les résultats obtenus sont représentés dans les tableaux ci-après. Si l'on y indique simplement "farine de blé" ou "graisse de palme" il s'agit toujours d'une farine de blé obtenue avec un degré d'extraction de 65% et d'une graisse de palme présentant un point de limpidité de 41—43°C.

Tableau I

Farine de blé et amidon de maïs dans un rapport de 3:1 et différentes teneurs en graisse de palme. Le no. 1 forme trop de grumeaux. Le no. 4 présente une viscosité trop faible.

| No. | Teneur en graisse % | Grumeaux % | Viscosité mPas |
|---|---|---|---|
| 1 | 30 | 7,6 | 27,4 |
| 2 | 36,5 | 0,9 | 30,4 |
| 3 | 40 | 0,5 | 22,8 |
| 4 | 50 | 0,2 | 11,8 |

Tableau 2

Graisse d'arachides avec un point de limpidité de 48—50°C, amidon de maïs et farine de blé dans différents rapports. Le no. 5 présente une viscosité plutôt trop grande à cause de la teneur en amidon inhabituellement grande. Le no. 6 présente une trop grande quantité de grumeaux.

| No. | Composition en % | | | Grumeaux % | Viscosité mPas |
|---|---|---|---|---|---|
| | Graisse | Amidon de maïs | Farine de blé | | |
| 1 | 40 | 15,5 | 45 | 1,1 | 19 |
| 2 | 38 | 15,5 | 46,5 | 0 | 21,3 |
| 3 | 36,5 | 10,0 | 53,5 | 0,8 | 16,7 |
| 4 | 36,5 | 15,9 | 47,6 | 0,2 | 25,1 |
| 5 | 36,5 | 47,6 | 15,9 | 1,5 | 45,6 |
| 6 | 30 | 17,5 | 52,5 | 3,3 | 25,1 |

Tableau 3

36,5% de graisse de différentes sortes, 15,9% d'amidon de maïs, 47,6% de farine de blé. Le no. 4 n'est pas utilisable parce que la graisse de soja présente une trop grande fraction liquide à 30°C (voir tableau 3bis).

| No. | Genre de graisse | Point de limpidité °C | Grumeaux % | Viscosité mPas |
|---|---|---|---|---|
| 1 | Graisse d'arachides | 48—50 | 0,2 | 25,1 |
| 2 | Graisse d'arachides | 41—43 | 2,9 | 30,5 |
| 3 | Graisse de palme | 41—43 | 1,0 | 30,4 |
| 4 | Graisse de soja | 36—38 | 1,2 | 20,3 |

Tableau 3bis

36,5% de graisse de différentes sortes, 15,9% d'amidon de maïs, 47,6% de farine de blé. En plus de la vitesse de refroidissement optimale et de la fraction liquide de la graisse à 30°C, on illustre encore la stabilisation nécessaire en cas de refroidissement rapide. Le domaine de températures recommandées a été déterminé après stabilisation d'une heure suivant un refroidissement à une vitesse de 50°C/min. Le no. 4 n'est pas utilisable parce que la graisse de soja a un point de fusion trop bas.

| No. | Genre de graisse | Fraction liquide de la graisse à 30°C % | Vitesse de refroidissement optimale °C/min | Domaine de stabilisation °C |
|---|---|---|---|---|
| 1 | Graisse d'arachides | 48—50  14,4 | 1,5 | 5—20 |
| 2 | Graisse d'arachides | 41—43  26,0 | 2 | 2,5—17 |
| 3 | Graisse de palme | 41—43  33,0 | 3 | 5—15 |
| 4 | Graisse de soja | 36—38  59,0 | 12 | (—10)—15 |

Tableau 4

Différentes sortes de farines. La farine d'avoine, No. 2 et 3, donne seule, sans amidon, un produit correct mais qui présente un léger goût de colle.

| No. | Genre de farine | Composition | | Grumeaux % | Viscosité mPas |
| | | Amidon de maïs % | Graisse de palme % | | |
|---|---|---|---|---|---|
| 1 | 47,6% de farine de blé avec un degré d'extraction de 80% | 15,9 | 36,5 | 1,8 | 25,1 |
| 2 | farine d'avoine 65% | — | 35 | — | 21,3 |
| 3 | farine d'avoine 70% | — | 30 | 0,5 | 26,6 |

Tableau 5

15,9% de différents amidons, 36,5% de graisse de palme, 47,6% de farine de blé.

| No. | Genre d'amidon | Grumeaux % | Viscosité mPas |
|---|---|---|---|
| 1 | Amidon de maïs | 1 | 30,4 |
| 2 | Amidon de pomme de terre | 1,8 | 36,5 |
| 3 | Amidon de blé | 2,8 | 26,2 |
| 4 | Amidon de riz | 2,5 | 28,2 |

Tableau 6

Farine de riz et farine de pois jaunes avec amidon de tapioca et graisse de palme dans divers rapports.

| No. | Composition en % | | | Grumeaux % | Viscosité mPas |
| | Graisse de palme | Amidon de tapioca | Farine de riz | | |
|---|---|---|---|---|---|
| 1 | 25 | 5 | 70 | 2 | 23,6 |
| 2 | 36,5 | 12,7 | 50,8 | 2,4 | 20,5 |
| | | | Farine de pois jaunes | | |
| 3 | 30 | 20,5 | 49,5 | 0,8 | 28,9 |
| 4 | 36,5 | 20,4 | 43 | 0,5 | 25,1 |
| 5 | 36,5 | 21,2 | 42,3 | 2 | 32 |

Tableau 7

Graisse de palme et farine de blé avec divers épaississants. Le no. 2 n'est utilisable et ne présente la viscosité indiquée que si l'on en mouille 5 g au lieu de 12 g avec 150 ml d'eau bouillante.

| No. | Composition | | | Grumeaux % | Viscosité mPas |
| | Graisse de palme % | Farine de blé % | Epaississant | | |
|---|---|---|---|---|---|
| 1 | 36,5 | 47,6 | 15,9% pectine | 1 | 20,6 |
| 2 | 45 | 42,5 | 12,5% gomme de Guar | 0 | (30,4) |

Tableau 8

50% de farine de blé, 30% de farine de palme, gélatine et amidon de tapioca dans divers rapports.

| No. | Gélatine % | Amidon de tapioca % | Grumeaux % | Viscosité mPas |
|---|---|---|---|---|
| 1 | 15 | 5 | 0,4 | 25,9 |
| 2 | 10 | 10 | 0,8 | 38,5 |

e fabrication d'une matière alimentaire de base instantanément dispersable dans matière amylacée et d'une graisse, dans lequel la graisse ou un mélange de la et de la graisse est soumise à un traitement thermique pour obtenir des llines adéquates de la graisse, caractérisé par le fait que le graisse présente un point —50°C, l'on utilise la matière amylacée et la graisse dans un rapport pondéral de l'on réalise le traitement thermique sous forme d'un refroidissement contrôlé de la domaine de température compris entre 35°C et 5—10°C étant traversé à une ement constante et sans interruption, de sorte que la fraction liquide de la graisse à es par résonnance magnétique nucléaire soit inférieure à 50%.

ion la revendication 1, caractérisé par le fait que la vitesse de refroidissement est t 800°C/min.

ion la revendication 1, caractérisé par le fait que, après le refroidissement contrôlé, ilisation par maintien à 2,5—20°C durant 5 min à 6 jours.

ion la revendication 1, caractérisé par le fait que la matière amylacée se compose de f complément d'amidon tel que l'amidon de maïs, de pomme de terre, de blé ou de ri

on la revendication 1, caractérisé par le fait que la matière amylacée se compose de fa on y ajoute de la gomme végétale, en particulier de la gomme de guar ou de la p

ion la revendication 1, caractérisé par le fait que la matière amylacée se compose de fa'on y ajoute de la gélatine ou de l'amidon de tapioca.

ion la revendication 1, caractérisé par le fait que la matière amylacée se compose de fai farine de pois jaunes et d'amidon de tapioca.

Pa

ur Herstellung einer in Wasser sofort dispergierbaren Nahrungsgrundlage aus einem M ett, bei welchem das Fett oder eine Mischung des Mehlmaterials und des Fetts einer th dlung zur Erreichung zweckmässiger Kristallmodifikationen im Fett unterworfen wi nnzeichnet, dass man das Mehlmaterial und ein einen Klarschmelzpunkt von 35— 50 s Fett in einem Gewichtsverhältnis von 55:45 bis 80:20 verwendet, und die ther- mi in Form einer kontrollierten Abkühlung des geschmolzenen Fetts durchführt, wobei der C und 5—10°C befindliche Temperaturbereich mit einer konstanten Abkühlrate un rchgelaufen wird, so dass def Flüssigfettanteil im Fett bei ungefähr 25—35°C nach ker Resonanzmessungen kleiner als 50% ist.

nach Anspruch 1, dadurch gekennzeichnet, dass die Abkühlrate 1 bis 800°C/Min. bet

nach Anspruch 1, dadurch gekennzeichnet, dass nach der kontrollierten Abkühlung eine durch Halten bei 2,5—20°C während 5 Min. bis 6 Tagen vorgesehen ist.

nach Anspruch 1, dadurch gekennzeichnet, dass das Mehlmaterial aus Weizenmehl unte Stärke wie Mais-, Kartoffel-, Weizen- oder Resstärke besteht.

nach Anspruch 1, dadurch gekennzeichnet, dass das Mehlmaterial aus Weizenmehl unte pflanangummi, insbesondere Guargummi, oder Pektin besteht.

nach Anspruch 1, dadurch gekennzeichnet, dass das Mehlmaterial aus Weizenmehl unter Gelate und Tapiokastärke besteht.

nach Anspruch 1, dadurch gekennzeichnet, dass das Mehlmaterial aus Reismehl oder Gl und Tapiokastärke besteht.

## Claims

1. s for production of a food base instantaneously dispersible in water which compris a flour terial and fat, and subjecting the fat, after admixture with the flour material to a heat nt to appropriate crystal modifications in the fat, characterised by comprising using a a cle ting point of 35—50°C, mixing the flour material and the fat in a ratio by weight c5:45 20, carrying out the heat treatment in the form of a controlled cooling of

the molten fat and passing the temperature range between 35°C and 5—10°C without interruption at a constant cooling rate so that the liquid fat content in the fat at approximately 25 to 35°C is less than 50% according to nuclear magnetic resonance measurements.

2. A process as claimed in Claim 1, wherein the cooling rate amounts to from 1 to 800°C/minute.

3. A process as claimed in Claim 1, further comprising the step of stabilising by storage at 2.5 to 20°C for 5 minutes to 6 days after the controlled cooling.

4. A process as claimed in Claim 1, wherein the flour material consists of wheat flour with added corn, potato, wheat or rice starch.

5. A process as claimed in Claim 1, wherein the flour material consists of wheat flour with added guar gum or pectin.

6. A process as claimed in Claim 1, wherein the flour material consists of wheat flour with added gelatin and tapioca starch.

7. A process as claimed in Claim 1, wherein the flour material consists of rice flour or yellow pea flour and tapioca starch.